# EUROPEAN PATENT SPECIFICATION

(11) **EP 3 869 069 B1**
(45) Date of publication and mention of the grant of the patent: **06.08.2025**
(21) Application number: 19882190.2
(22) Date of filing: 08.11.2019
(51) Int. Cl.: F16H 45/02

(54) **LOCK-UP APPARATUS FOR TORQUE CONVERTER**
SPERRGERÄT FÜR DREHMOMENTWANDLER
APPAREIL DE VERROUILLAGE POUR CONVERTISSEUR DE COUPLE

(30) Priority: 08.11.2018 JP 2018210763; 04.09.2019 JP 2019161371
(43) Date of publication of application: 25.08.2021
(73) Proprietor: Valeo Kapec Japan KK, Atsugi-city, Kanagawa 243-0218 (JP)
(72) Inventor: INOUE, Atsushi, Atsugi-shi, Kanagawa 243-0213 (JP); ISHIZAKA, Shintaro, Atsugi-shi, Kanagawa 243-0213 (JP)
(74) Representative: Isarpatent
(86) International application number: PCT/JP2019/043989
(87) International publication number: WO 2020/096054

(56) References cited:
- DE-A1- 19 745 344
- JP-A- 2011 208 791
- JP-A- 2012 057 694
- JP-A- 2012 057 694
- US-A1- 2018 163 794

## Description

### BACKGROUND OF THE INVENTION

### (a) Field of the Invention

The present invention relates to a lock-up device of a hydraulic power transmission (a so-called torque converter) interposed between, for example, an engine crankshaft of a vehicle and an input shaft of a transmission.

### (b) Description of the Related Art

In a torque converter assembled in a vehicle automatic transmission, a front cover constituting a front part of a converter housing is rotationally driven on a crankshaft, a torque is transmitted between blades on a pump impeller side of the converter housing and blades on a turbine runner side, and the torque is transmitted from the output shaft driven by the turbine runner to the input shaft of the transmission.

In addition, the torque converter operates a lock-up clutch by using a lock-up piston to promote fuel consumption and a lock-up device transmitting the torque of the crankshaft of the engine to the transmission through a torsion spring (an elastic body) for absorbing an impact (a torsional vibration).

Here, in order to speed up a response (separation) speed of the lock-up piston when the lock-up clutch operation is stopped, a spring pack with a built-in spring between the clutch support and the lock-up piston may be used.

For example, JP S54 14490 B1 discloses a technical idea of installing a coil spring on an inner circumference side of an engaging portion in which a flange member installed on a piston member is protruded. According to this, it is shown that the piston member is pressed by the coil spring in the direction that the clutch is disengaged, which accelerates the response when the clutch is disconnected.

However, according to this technical idea, since the spring is mounted on the piston itself, it does not consist of an independent unit called a spring pack, and an assembly adjustment becomes difficult.

JP 2012 057694 A describes a torque converter comprising a clutch having a plurality of clutch plates supported by a clutch supporting member, and a piston configured for pressurizing the plates. A spring pack is provided between the piston and a member to which the clutch supporting member is fixed, wherein the spring pack applies a force to separate the piston and the clutch plates The spring pack includes a retainer plate and a plurality of spring supporters.

### SUMMARY OF THE INVENTION

The present invention seeks to solve such a conventional art problems existing in a lock-up device consisting of a lock-up clutch, a lock-up piston, an input side clutch support, etc.. It is one of the objects of the invention to provide a lock-up device with excellent assemblability and simultaneously reducing a mutual rotation between the lock-up piston and the input side clutch support, which simultaneously increases the response of the lock-up piston.

In order to solve such a problem the invention provides a lock-up device for a torque converter according to claim 1.

In this way, since the spring pack presses the lock-up piston in the direction of releasing the clutch, the response speed at the time of the clutch release is accelerated, and simultaneously, the mutual rotation of the lock-up piston and the input side clutch supporter generated during the rapid acceleration may be prevented by the mutual rotation prevention mechanism. In addition, since the spring pack is composed as an independent unit, it is possible to be assembled to the torque converter after being externally assembled and adjusted, which helps to improve efficiency such as a number reduction of an assembling adjustment process.

In addition, according to the present invention, the spring pack includes:
- a first retainer plate installed on the side of the lock-up piston and fixed with the lock-up piston;
- a second retainer plate installed to the input side clutch supporter side;
- a plurality of first spring supporters installed on a surface of the first retainer plate facing the second retainer plate;
- a plurality of second spring supporters installed on a surface of the second retainer plate facing the first retainer plate; and
- a plurality of coil springs supported by the first spring supporter and the second spring supporter.

In this way, after assembling the spring pack at the outside, it is possible to fix the first retainer plate to the lock-up piston by rivet combination and the effect of the number reduction of the assemble process described above is realized.

According to the present invention, the mutual rotation prevention mechanism has:
- an outer gear installed on the exterior circumference of the first retainer plate of the spring pack; and
- an inner gear installed in the inner circumference of the input side clutch supporter close to the exterior circumference of the first retainer plate and engaged with the outer gear installed in the exterior circumference of the first retainer plate.

In this way, by a simple structure of the outer gear and the inner gear, the spring pack and the input side clutch supporter are free to move in the axis direction, but the mutual rotation is prevented, and therefore, the mutual rotation between the lock-up piston fixed to the spring pack and the input side clutch supporter is also prevented.

According to a further exemplary embodiment, and it may provided that an exterior circumference portion of the second retainer plate has a shape that is bent toward the input side and is in contact with input side clutch supporter on a front end surface.

Here, the front end surface refers to contacting the exterior circumference portion of the second retainer plate by an L-shaped bent end or a Z-shaped bent small area, not the contact by the wide side without bending of the second retainer plate.

In this way, the spring pack may be mounted more compactly than when contacting on the wide surface, thereby reducing the entire space of the torque converter.

According to an embodiment, the lock-up piston includes a plurality of rivets for fixing the first retainer plate and the lock-up piston, and the coil spring is not disposed at the fixing position of the rivet.

In this way, since the coil spring is not disposed near the rivet fixing position, the rivet fixing position may be close to the exterior circumference of the first retainer plate, thereby the first retainer plate may be down-sized, and also as the rivet fixing position and the spring position are close, the occurrence of a rotation moment or a bending stress may be reduced, and even pressure may be applied.

According to an embodiment, an exterior circumference portion of the lock-up piston is bent to the output side in the axis direction and is supported by the piston guide at that portion.

In this way, the exterior circumference of the lock-up piston may be reduced, and a larger torsion damper or pendulum may be installed on the outside of the lock-up piston while maintaining the entire size of the torque converter, and the entire size of the torque converter may be compacted if the torsion damper is used as in the conventional art.

In addition, in the lock-up piston, since the exterior circumference portion is supported by the piston guide with a bending structure on the bending surface thereof, it may avoid unintentional deformation of the lock-up piston, and it may have many effects such as maintaining good centering.

Further, it may be provided that a plurality of hole portions are installed to the first retainer plate as a part of the spring pack, and a plurality of extrusion rivets as a part of the lock-up piston are protruded in the spring pack direction, wherein the extrusion rivets are capable of being inserted into the hole portions of the first retainer plate.

In other words, since a cylindrical rivet-shaped part (referred to as an extrusion rivet) is formed in a form of protruding the flat part of the lock-up piston at the same radius part at the axial center of the lock-up piston and the part as a rivet is inserted into the hole portion of the first retainer plate, the rivet as a separate member as described so far becomes unnecessary, and thus the structure may be simplified, the number of parts and the number of the assembling processes may be reduced, and further, the reduction in manufacturing cost may be expected.

In addition, the extrusion rivet part is integrally molded and does not have a rivet hole, which is a separate member, so there is no risk of liquid leakage from this part, and thus, the piston may be operated stably for a long time without deteriorated pressure.

It is also desirable to disable a movement in the axis direction by caulking the extrusion rivet head part (the part protruded from the first retainer plate).

However, without caulking the head part, it may be fixed by force-fitting or a spring force, or it may be moved in the axis direction. The stabilization in the axis direction may be maintained by a compressing spring force between the spring pack and the lock-up piston.

According to a further embodiment, the coil spring is not disposed at the position of the extrusion rivet of the lock-up piston which is inserted into the hole portion of the first retainer plate.

In this way, as in the case of the fifth aspect, by not disposing the coil spring near the extrusion rivet position, the extrusion rivet position may be close to the exterior circumference of the first retainer plate, thereby down-sizing the first retainer plate, and in addition, as the extrusion rivet position and the spring position are close together, the occurrence of a rotation moment or bending stress may be reduced, and even pressure may be applied.

According to the present invention, it is possible to provide the lock-up device simultaneously having excellent assembly performance while reducing mutual rotation between the lock-up piston and the input side clutch supporter, which simultaneously increases the response of the lock-up piston in the lock-up device.

In addition, in the sixth aspect of the present invention, it is possible to provide the torque converter that may effectively utilize the outside of the lock-up piston exterior circumference portion.

### BRIEF DESCRIPTION OF THE DRAWINGS

FIG. 1 is a longitudinal cross-sectional view of a torque converter including a lock-up device according to an exemplary embodiment of the present invention.
FIG. 2 is a top plan view of a lock-up device according to an exemplary embodiment of the present invention.
FIG. 3 is a perspective view of a spring pack of a lock-up device according to an exemplary embodiment of the present invention.
FIG. 4 is a top plan view of a first retainer plate of a device according to an exemplary embodiment of the present invention.
FIG. 5 is a top plan view of an input side clutch supporter of a device according to an exemplary embodiment of the present invention.
FIG. 6 is a longitudinal cross-sectional view of an input side clutch supporter of a device according to an exemplary embodiment of the present invention.
FIG. 7 is a top plan view of a lock-up device according to another exemplary embodiment of the present invention.
FIG. 8 is an explanatory diagram of a lock-up device according to another exemplary embodiment of the present invention.

### DETAILED DESCRIPTION OF THE EMBODIMENTS

Hereinafter, a form for carrying out the present invention will be described with reference to the drawings. In addition, in the following, a range required for explanation for achieving the object of the present invention is schematically shown, and a range required for explanation of the corresponding part of the present invention is mainly described, and a part to which the description is omitted will be made by known technology.

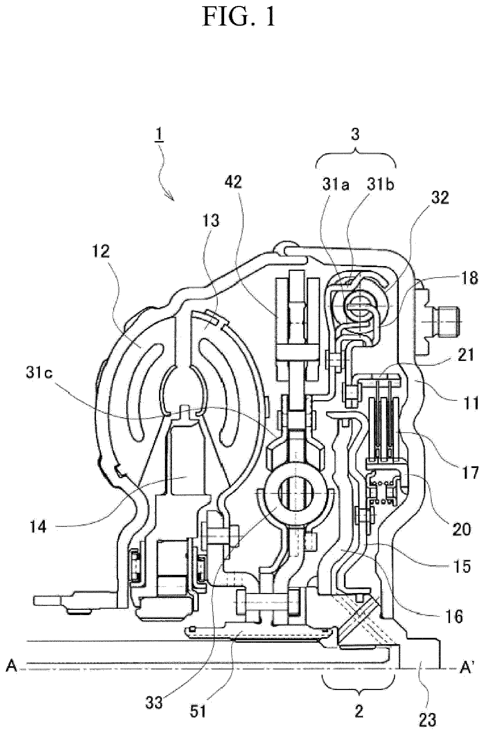

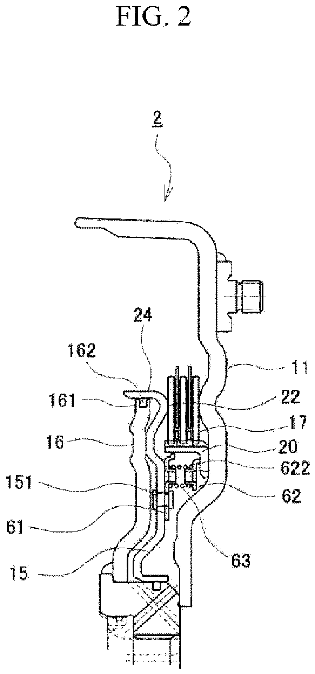

FIG. 1 is a longitudinal cross-sectional view of a torque converter including a lock-up device according to an exemplary embodiment of the present invention, in which an upper par is only shown and a lower part is omitted, and FIG. 2 is a top plan view of a lock-up device according to an exemplary embodiment of the present invention.

A torque converter 1 is a device for transmitting a torque from a crankshaft of an engine to an input shaft of a transmission. The engine that is not shown is disposed on the right side of the drawing, and the transmission that is not shown is disposed on the left side of the drawing. A-A' shown in the drawing is a rotation axis of the torque converter 1.

In addition, unless otherwise specified, the input side represents the right side of the drawing (front cover side), and the output side represents the left side of the drawing opposite to the input side. Also, the inside or inner circumference refers to the side closer to the rotation axis, and the outside or outer circumference refers to the side far from the rotation axis. Further, the axis direction is assumed to indicate the direction in which the rotation axis extends.

As shown in FIG. 1, a torque converter 1 mainly includes a front cover 11 and three type impellers (pump impellers) 12, a turbine runner 13, stator blades 14, a lock-up device 2, and a vibration absorption device 3 including members such as a retainer plate 31, an outer elastic member 32, an inner elastic member 33, a centrifugal pendulum 42, and a turbine hub 51 that receives power from the front cover 11.

Here, when the lock-up device 2 is not operating, the power from the front cover 11 is fluidly transmitted to the turbine hub 51 via the impeller.

On the other hand, when the lock-up device 2 is in operation, the power from the front cover 11 is transferred mechanically to the turbine hub 51.

The lock-up device 2 includes a lock-up clutch 17 made of a lock-up plate of a multi-layered plate disposed between the front cover 11 and the turbine hub 51, an input side clutch supporter 20 and an output side clutch supporter 21 supporting the lock-up clutch 17, a lock-up piston 15, a piston guide 16, a spring pack 60 installed between the lock-up piston 15 and the input side clutch supporter 20, and a drive plate 18 fixed and coupled to the output side clutch supporter 21.

The lock-up piston 15 is disposed inside the output side clutch supporter 21 between the front cover 11 and the vibration absorption device 3. The lock-up piston 15 is formed in an annular shape, and includes a pressing part 22 protruding on the input side.

In addition, the disk-shaped inner circumferential portion of the lock-up piston 15 is fixed to the cover hub 23, and the disk-shaped exterior circumference portion has a cylindrical edge portion 24 that is opened from the axis direction to the output side.

As above-described, if the exterior circumference portion of the lock-up piston 15 is bent in the axis direction output side and is supported to the piston guide 16 at that portion, the exterior circumference of the lock-up piston 15 may be reduced, and instruments such as a larger torsional damper and a pendulum may be installed on the outside of the lock-up piston 15 while maintaining the entire size of the torque converter 1, or if the torsion damper or the like is conventionally used, the entire size of the torque converter 1 may be compact.

In addition, the lock-up piston 15 is supported by the piston guide 16 on the bent surface with the structure in which the exterior circumference portion is bent, so that unintended deformation of the lock-up piston 15 may be avoided and a lot of effects such as a good maintenance of centering may be obtained.

In addition, around the central portion of the lock-up piston 15, six holes 151 for fixing rivets are installed evenly on the circumference.

The piston guide 16 is equally formed in an annular shape on the output side of the lock-up piston 15, the inner circumference side of the disk shape is firmly bonded to the cover hub 23, and the outer circumference portion of the disk shape is in contact with the inner surface side of the edge portion 24 of the lock-up piston 15 by interposing an O-ring 162 as a sealing member disposed on the recessed portion 161.

The lock-up piston 15 and piston guide 16 move in the axis direction input side by the pressure due to the internal oil of the torque converter 1. By this movement, the pressing part 22 presses the multi-layered plate clutch 17 and establishes a lock-up state.

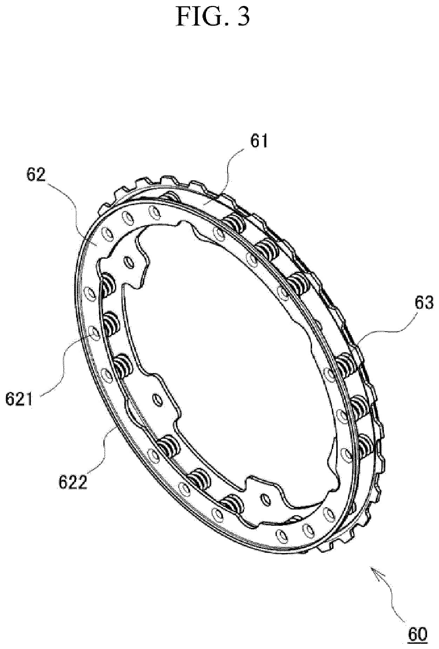

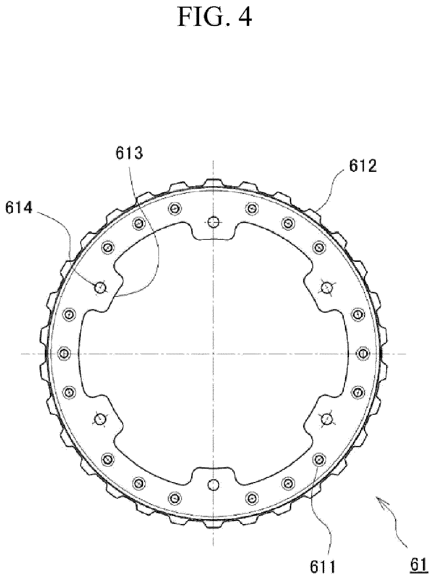

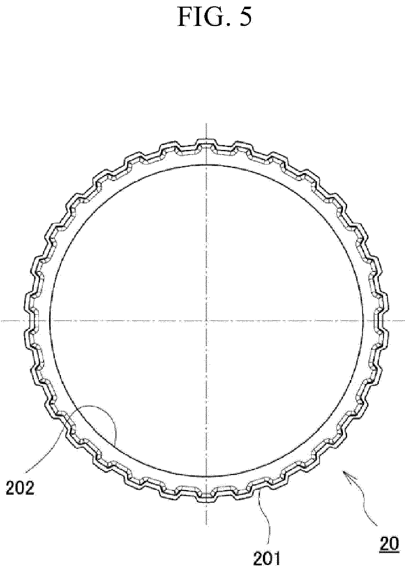

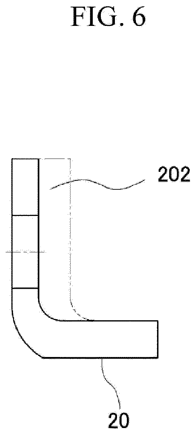

FIG. 3 is a perspective view of a spring pack of a lock-up device according to an exemplary embodiment of the present invention, FIG. 4 is a top plan view of a first retainer plate of a device according to an exemplary embodiment of the present invention, FIG. 5 is a top plan view of an input side clutch supporter of a device according to an exemplary embodiment of the present invention, and FIG. 6 is a longitudinal cross-sectional view of an input side clutch supporter of a device according to an exemplary embodiment of the present invention.

The spring pack 60 includes a first retainer plate 61 installed between the lock-up piston 15 and the input side clutch supporter 20 and fixed to the lock-up piston 15, a second retainer plate 62 installed at the input side clutch supporter 20 side, a plurality of first spring supporters 611 installed at the surface facing the second retainer plate 62 of the first retainer plate 61, a plurality of second spring supporters 621 installed at the surface facing the first retainer plate 61 of the second retainer plate 62, and a coil spring 63 sandwiched between the first spring supporter 611 and the second spring supporter 621.

The first retainer plate 61 has an approximate ring shape, and a thin plate shape, has a plurality of protruded portions, that is an external gear 612 on a most of the exterior circumference thereof, and has a plurality of first spring supporters 611 (18 in the present exemplary embodiment) formed by a burring process, and protruded to the second retainer plate 62 and fitted with the interior diameter of the coil spring.

In addition, the inner periphery of the first retainer plate 61 has six tongue portions 613 protruded inward, and the central portion thereof has a rivet fixing hole 614.

Also, the first spring supporter 611 is installed evenly on the circumference, but it is not installed where the tongue portion 613 is located. Therefore, the spring supporters 611 that must be installed in 24 places originally are formed in 18 places.

The reason is that if the first spring supporter 611 is installed in the place where the tongue portion 613 is located, the rivet hole 614 of the tongue portion 613 must be installed further inside and the size of the first retainer plate 61 increases, and in addition, if the first retainer plate 61 is fixed to the lock-up piston 15 with the rivet, there is a risk of generating unnecessary rotation moment or bending stress during the operation or releasing of the lock-up.

The second retainer plate 62 is formed by a burring process with an approximately ring shape, with a thin plate shape, and has a plurality of second spring supporters 621 (18 in the present exemplary embodiment) protruded to the first retainer plate 61 side and fitted with the interior diameter of the coil spring 63.

In addition, the outermost circumference of the second retainer plate 62 has an edge portion 622 that is bent with an L-shape on the input side in the axis direction and is in contact with the cylinder bottom of the input side clutch supporter 20 at the front end surface of the edge portion 622.

In addition, the second retainer plate 62 may not have the L-shaped edge portion 622 formed on the exterior circumference portion, but may have an L-shaped portion formed on the inner circumference, and in any case, it may be in contact with the front cover 11 rather than the input side clutch supporter 20.

Alternatively, the second retainer plate 62 may have a Z-shaped bend rather than the L-shaped bend, and it may be in contact with the input side clutch supporter 20 or the front cover 11 in the shorter plane.

In addition, the number of spring supporters, tongue portions, etc. until now is an example, and may be more or less than this, and it is effective depending on the degree.

The input side clutch supporter 20 is approximately cylindrical, and one bottom surface is bent to the inner circumference side and fixed to the front cover 11 at that part.

In addition, the external circumferential surface of the input side clutch supporter 20 is formed with an outer gear 201 to support the multi-layered plate clutch plate of the lock-up clutch 17, while the interior circumference of the input side clutch supporter 20 is formed with the inner gear 202 in a form that is shared with the outer gear 201 and is made to engage with the outer gear 612 of the first retainer plate 61.

Next, an assembly procedure of the lock-up device of an exemplary embodiment of the present invention will be described.

First, the first retainer plate 61 is horizontally disposed, so that the first spring supporter 611 faces upward, and is fit to the interior diameter of the coil spring 63 thereon.

Next, the second retainer plate 62 is mounted so that the second spring supporter 621 fits into the interior diameter of the coil spring 63. In this state, the partial assembly of the spring pack 60 is completed.

Then, the piston guide 16 and the lock-up piston 15 are mounted horizontally in this order.

In this state, the partially assembled spring pack 60 is mounted upwardly.

After that, the rivet hole 614 of the first retainer plate 61 of the spring pack 60 and the rivet hole 151 of the lock-up piston 15 are fixed with a rivet. Accordingly, the partial assembly of the lock-up device is completed.

In this way, since the assembling of the spring pack 60 may be performed independently in advance, the assembling work may be easily and accurately performed, and an effect of reducing the number of assembling processes may be obtained.

Next, the operation of the lock-up device according to an exemplary embodiment of the present invention is described.

When the lock-up piston 15 is hydraulically pressed in the direction of the lock-up clutch 17, the pressing part 22 causes the lock-up clutch 17 to be connected. As a result, the power from the front cover 11 is transmitted to the input side clutch supporter 20, the lock-up clutch 17, the output side clutch supporter 21, and the drive plate 18, and is also transmitted to the output side turbine hub 51 via an intermediate member.

At this time, if there is a sudden acceleration on the input side, there is a risk of a mutual rotation between the lock-up piston 15 and the input side clutch supporter 20 and the front cover 11 fixed thereto.

Even in such a state, since the outer gear 612 of the external circumferential surface of the first retainer plate 61 of the spring pack 60 fixed and coupled with the lock-up piston 15 and the inner gear 202 of the inner circumference side of the input side clutch supporter 20 are interlocked, the mutual rotation may be prevented.

In addition, when the connection with the lock-up clutch 17 is released, the lock-up piston 15 is separated by the elastic force of the coil spring 63 embedded in the spring pack 60, and the lock-up state is quickly released.

In addition, the fixing of the first retainer plate 61 of the spring pack 60 and the lock-up piston 15 is performed with a rivet, but since the rivet position is close to the position of the coil spring 63 in the radial direction, it is possible to reduce the occurrence of the rotation moment or the bending stress during the locking-up or releasing of the lock-up piston 15 and stable operation is possible.

Next, the lock-up device according to another exemplary embodiment of the present invention is described.

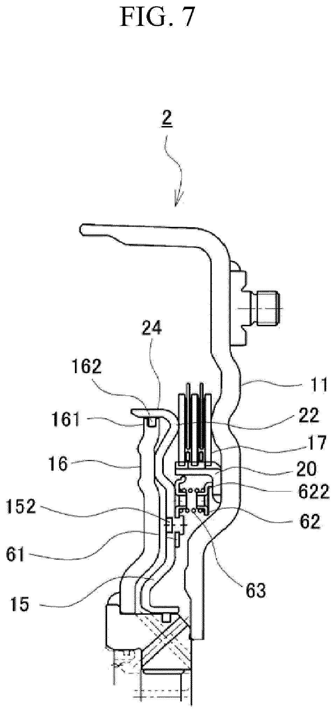

FIG. 7 is a top plan view of a lock-up device according to another exemplary embodiment of the present invention, which is a modification of some of the previous exemplary embodiment, and parts common to the previous exemplary embodiment are indicated by the same numbers and detailed description thereof is omitted.

In the central portion of the lock-up piston 15, 6 cylindrical extrusion rivets 152 are formed evenly on the circumference.

The extrusion rivet 152, also called an extruded rivet or a semi-pierced rivet, is formed in a rivet shape by extruding the flat part of the lock-up piston 15 in a cylindrical shape toward the spring pack 60 side, and the extrusion part is not penetrated. Therefore, the lock-up piston 15 has a structure without a hole portion.

On the other hand, the spring pack 60 has the same structure as described so far, and the first retainer plate 61 has 6 holes 614 with an interior diameter that is slightly larger than the exterior diameter of the extrusion rivet 152 in the location corresponding to the extrusion rivet 152.

In this state, the lock-up piston 15 and the first retainer plate 61 are fixed in the axis direction by caulking the protruded head portion of the extrusion rivet 152 in the state that the extrusion rivet 152 is inserted into the six holes 614.

The advantage of such a fixing method is that it is not necessary to prepare the rivet as a separate member, a member cost may be reduced, and even when assembling, the work such as inserting and a temporary fixing of the rivet is unnecessary, and the number of the work processes may be expected to be reduced.

In addition, since the lock-up piston 15 does not have a hole for fastening rivets, power transmission is efficiently performed without causing fluid leakage or a pressure deterioration.

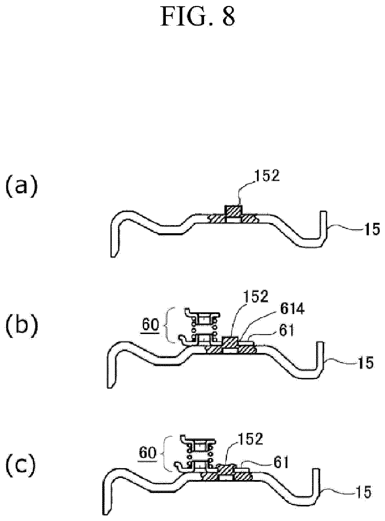

Here, the assembly sequence of another exemplary embodiment of the present invention will be described. FIG. 8 is an explanatory diagram of a lock-up device according to another exemplary embodiment of the present invention.

First, partial assembling of the spring pack 60 is performed by mounting and fitting the coil spring 63 and the second retainer plate 62 to the first retainer plate 61 with 6 holes 614.

Meanwhile, six extrusion rivets 152 are formed on the lock-up piston 15 (FIG. 8 (a)).

Next, the lock-up piston 15 is horizontally disposed, the spring pack 60 is lowered from above, and the extrusion rivet 152 is inserted into the hole 614 of the first retainer plate 61 (FIG. 8 (b)).

Finally, the head portion that the extrusion rivet 152 is protruded is caulked (FIG. 8 (c)). This completes the assembling of the lock-up device.

In addition, it is preferable to caulk the head portion of the extrusion rivet 152, but it may be force-fitted without caulking or may be loosely fitted.

In addition, the present invention is not limited to the above-described exemplary embodiment.

As described above, the present invention is widely used in industry to improve the performance of torque converters of vehicles such as automobiles, and has high availability.

### [List of reference signs]

1 torque converter
2 lock-up device
11 front cover
15 lock-up piston
16 piston guide
17 lock-up clutch
20 input side clutch supporter
21 output side clutch supporter
23 cover hub
51 turbine hub
60 spring pack

## Claims

1. A lock-up device (2) for a torque converter (1), comprising:
an input side clutch supporter (20) fixed to a front cover (11) for transmitting power from a drive side;
a lock-up clutch (17) having a plurality of clutch plates supported by the input side clutch supporter (20);
a lock-up piston (15) to pressurize the clutch plates to make the clutch connected;
a piston guide (16) supporting an end portion of the lock-up piston (15);
a spring pack (60) fixed to the lock-up piston (15) and installed between the lock-up piston (15) and the input side clutch supporter (20), the spring pack (60) including:
a first retainer plate (61) installed on the side of the lock-up piston (15) and fixed with the lock-up piston (15),
a second retainer plate (62) installed to the input side clutch supporter side,
a plurality of first spring supporters (611) installed on a surface of the first retainer plate (61) facing the second retainer plate (62),
a plurality of second spring supporters (621) installed on a surface of the second retainer plate (62) facing the first retainer plate (61), and
a plurality of coil springs (63) supported by the first spring supporters (611) and the second spring supporters (621), the coil springs (63) pressing the lock-up piston (15) in the direction of releasing the clutch (17); and
a mutual rotation prevention mechanism that prevents mutual rotation between the lock-up piston (15) and the input side clutch supporter (20), wherein
the mutual rotation prevention mechanism includes:
an outer gear (612) installed on the exterior circumference of the first retainer plate (61) of the spring pack (60); and
an inner gear (202) installed in the inner circumference of the input side clutch supporter (20) and engaged with the outer gear (612) installed in the exterior circumference of the first retainer plate (61).

2. The lock-up device (2) of claim 1, wherein
an outer circumference portion (622) of the second retainer plate (62) is shaped to be bent toward the input side and, on a front end surface, is in contact with the input side clutch supporter (20).

3. The lock-up device (2) of claim 1, wherein
the first retainer plate (61) and the lock-up piston (15) are fixed together by a plurality of rivets (152), and the coil springs (63) are not disposed at the fixing positions of the rivets.

4. The lock-up device (2) of claim 1, wherein
an outer circumference portion (24) of the lock-up piston (15) is bent to the output side of the axis direction and supported by the piston guide (16) at that portion.

5. The lock-up device (2) of claim 1, wherein
a plurality of hole portions are installed to the first retainer plate (61) as a part of the spring pack (60),
a plurality of extrusion rivets (152) as a part of the lock-up piston (15) are protruded in the spring pack (60) direction, and
the extrusion rivets (152) are capable of being inserted into the hole portions of the first retainer plate (61).

6. The lock-up device (2) of claim 5, wherein
the coil springs (63) are not disposed at the position of the extrusion rivet (152) of the lock-up piston (15) which are inserted into the hole portions of the first retainer plate (61).

## Patentansprüche

1. Sperrvorrichtung (2) für einen Drehmomentwandler (1), umfassend:
eine eingangsseitige Kupplungsstützvorrichtung (20), die an einer vorderen Abdeckung (11) befestigt ist, um Leistung von einer Antriebsseite zu übertragen;
eine Sperrkupplung (17), die mehrere Kupplungsscheiben aufweist, die von der eingangsseitigen Kupplungsstützvorrichtung (20) gestützt sind;
einen Sperrkolben (15) zur Druckbeaufschlagung der Kupplungsscheiben, um die Kupplung einzukuppeln;
eine Kolbenführung (16), die einen Endabschnitt des Sperrkolbens (15) stützt;
ein Federpaket (60), das an dem Sperrkolben (15) befestigt und zwischen dem Sperrkolben (15) und der eingangsseitigen Kupplungsstützvorrichtung (20) installiert ist, wobei das Federpaket (60) aufweist:
eine erste Halteplatte (61), die an der Seite des Sperrkolbens (15) installiert und an dem Sperrkolben (15) befestigt ist,
eine zweite Halteplatte (62), die auf der eingangsseitigen Kupplungsstützvorrichtungsseite installiert ist,
mehrere erste Federstützvorrichtungen (611), die an einer Fläche der ersten Halteplatte (61) installiert sind, die der zweiten Halteplatte (62) zugewandt ist,
mehrere zweite Federstützvorrichtungen (621), die an einer Fläche der zweiten Halteplatte (62) installiert sind, die der ersten Halteplatte (61) zugewandt ist, und
mehrere Schraubenfedern (63), die von den ersten Federstützvorrichtungen (611) und den zweiten Federstützvorrichtungen (621) gestützt sind, wobei die Schraubenfedern (63) den Sperrkolben (15) in die Richtung des Auskuppelns der Kupplung (17) drücken; und
einen Mechanismus zur Verhinderung einer gegenseitigen Drehung, der eine gegenseitige Drehung zwischen dem Sperrkolben (15) und der eingangsseitigen Kupplungsstützvorrichtung (20) verhindert, wobei der Mechanismus zur Verhinderung einer gegenseitigen Drehung aufweist:
einen äußeren Zahnkranz (612), der am Außenumfang der ersten Halteplatte (61) des Federpaketes (60) installiert ist; und
einen inneren Zahnring (202), der im Innenumfang der eingangsseitigen Kupplungsstützvorrichtung (20) installiert ist und mit dem äußeren Zahnkranz (612), der im Außenumfang der ersten Halteplatte (61) installiert ist, im Eingriff steht.

2. Überbrückungsvorrichtung (2) nach Anspruch 1, wobei
ein Außenumfangsabschnitt (622) der zweiten Halteplatte (62) so geformt ist, dass er zur Eingangsseite hin gebogen ist und an einer vorderen Endfläche mit der eingangsseitigen Kupplungsstützvorrichtung (20) in Kontakt steht.

3. Überbrückungsvorrichtung (2) nach Anspruch 1, wobei
die erste Halteplatte (61) und der Sperrkolben (15) durch mehrere Niete (152) aneinander befestigt sind und die Schraubenfedern (63) nicht an den Befestigungspositionen der Niete angeordnet sind.

4. Überbrückungsvorrichtung (2) nach Anspruch 1, wobei
ein Außenumfangsabschnitt (24) des Sperrkolbens (15) zur Ausgangsseite der Achsenrichtung hin gebogen ist und von der Kolbenführung (16) an diesem Abschnitt gestützt ist.

5. Überbrückungsvorrichtung (2) nach Anspruch 1, wobei
mehrere Lochabschnitte an der ersten Halteplatte (61) als ein Teil des Federpaketes (60) installiert sind, mehrere Extrusionsniete (152) als ein Teil des Überbrückungskolbens (15) in Richtung des Federpaketes (60) vorstehen und
die Extrusionsniete (152) dazu geeignet sind, in die Lochabschnitte der ersten Halteplatte (61) eingesetzt zu werden.

6. Überbrückungsvorrichtung (2) nach Anspruch 5, wobei die Schraubenfedern (63) nicht an der Position der Extrusionsniete (152) des Sperrkolbens (15), die in die Lochabschnitte der ersten Halteplatte (61) eingesetzt sind, angeordnet sind.

## Revendications

1. Dispositif de verrouillage (2) pour un convertisseur de couple (1), comprenant :
un support d'embrayage côté entrée (20) fixé à un couvercle avant (11) pour transmettre la puissance depuis un côté entraînement ;
un embrayage de verrouillage (17) comportant une pluralité de disques d'embrayage supportés par le support d'embrayage côté entrée (20) ;
un piston de verrouillage (15) pour exercer une pression sur les disques d'embrayage afin de connecter l'embrayage ;
un guide de piston (16) supportant une partie d'extrémité du piston de verrouillage (15) ;
un bloc-ressorts (60) fixé au piston de verrouillage (15) et installé entre le piston de verrouillage (15) et le support d'embrayage côté entrée (20), le bloc-ressorts (60) incluant :
une première plaque de retenue (61) installée sur le côté du piston de verrouillage (15) et fixée au piston de verrouillage (15),
une seconde plaque de retenue (62) installée sur le côté du support d'embrayage côté entrée,
une pluralité de premiers supports de ressort (611) installés sur une surface de la première plaque de retenue (61) faisant face à la seconde plaque de retenue (62),
une pluralité de seconds supports de ressort (621) installés sur une surface de la seconde plaque de retenue (62) faisant face à la première plaque de retenue (61), et
une pluralité de ressorts hélicoïdaux (63) supportés par les premiers supports de ressort (611) et les seconds supports de ressort (621), les ressorts hélicoïdaux (63) pressant le piston de verrouillage (15) dans le sens de libération de l'embrayage (17) ; et
un mécanisme de prévention de rotation mutuelle qui empêche la rotation mutuelle entre le piston de verrouillage (15) et le support d'embrayage côté entrée (20), dans lequel
le mécanisme de prévention de rotation mutuelle inclut :
un engrenage extérieur (612) installé sur la circonférence extérieure de la première plaque de retenue (61) du bloc-ressorts (60) ; et
un engrenage intérieur (202) installé dans la circonférence intérieure du support d'embrayage côté entrée (20) et en prise avec l'engrenage extérieur (612) installé dans la circonférence extérieure de la première plaque de retenue (61).

2. Dispositif de verrouillage (2) selon la revendication 1,
dans lequel
une partie de circonférence extérieure (622) de la seconde plaque de retenue (62) est formée de manière à être pliée vers le côté entrée et, sur une surface d'extrémité avant, est en contact avec le support d'embrayage côté entrée (20).

3. Dispositif de verrouillage (2) selon la revendication 1,
dans lequel
la première plaque de retenue (61) et le piston de verrouillage (15) sont fixés ensemble par une pluralité de rivets (152) et les ressorts hélicoïdaux (63) ne sont pas disposés aux positions de fixation des rivets.

4. Dispositif de verrouillage (2) selon la revendication 1,
dans lequel
une partie de circonférence extérieure (24) du piston de verrouillage (15) est pliée vers le côté sortie de la direction de l'axe et supportée par le guide de piston (16) au niveau de cette partie.

5. Dispositif de verrouillage (2) selon la revendication 1,
dans lequel
une pluralité de parties perforées sont installées sur la première plaque de retenue (61) en tant que partie du bloc-ressorts (60),
une pluralité de rivets d'extrusion (152) faisant partie du piston de verrouillage (15) font saillie en direction du bloc-ressorts (60), et
les rivets d'extrusion (152) peuvent être insérés dans les parties perforées de la première plaque de retenue (61).

6. Dispositif de verrouillage (2) selon la revendication 5,
dans lequel
les ressorts hélicoïdaux (63) ne sont pas disposés à la position des rivets d'extrusion (152) du piston de verrouillage (15) qui sont insérés dans les parties perforées de la première plaque de retenue (61).
